# EUROPÄISCHE PATENTSCHRIFT

(11) **EP 1 512 544 B1**
(45) Veröffentlichungstag und Bekanntmachung des Hinweises auf die Patenterteilung: **16.11.2005**
(21) Anmeldenummer: 03405650.7
(22) Anmeldetag: 08.09.2003
(51) Int. Cl.: B41M 5/00, C01F 7/02, C09D 7/12

(54) **Aufzeichnungsmaterial für den Tintenstrahldruck**
Recording sheet for ink jet printing
Feuille d'enregistrement pour l'impression par jet d'encre

(43) Veröffentlichungstag der Anmeldung: 09.03.2005
(73) Patentinhaber: ILFORD Imaging Switzerland GmbH, 1723 Marly 1 (CH)
(72) Erfinder: Furrer, Gerhard, 8006 Zürich (CH); Banerjee, Dipanjan, 8006 Zürich (CH); Rentsch, Daniel, 8057 Zürich (CH); Studer, Björn, 8400 Winterthur (CH); Beer, Robert, 1723 Marly (CH); Steiger, Rolf, 1724 Praroman-Le Mouret (CH)

(56) Entgegenhaltungen:
- DE-A- 10 020 346

## Beschreibung

### Technisches Gebiet

Die vorliegende Erfindung bezieht sich auf Aufzeichnungsmaterialien für den Tintenstrahldruck, die nanokristalline, nanoporöse anorganische Verbindungen sowie einen polynuklearen Aluminiumhydroxokomplex mit 30 Aluminiumatomen enthalten, sowie auf Beschichtungsmassen zur Herstellung solcher Aufzeichnungsmaterialien.

### Stand der Technik

Es gibt im wesentlichen zwei unterschiedliche Verfahren beim Tintenstrahldruck, nämlich den kontinuierlichen und den nichtkontinuierlichen Tintenstrahldruck.
Beim kontinuierlichen Tintenstrahldruck wird unter Druck aus einer Düse ein Tintenstrahl ausgestossen, der in einem gewissen Abstand von der Düse in einzelne Tröpfchen zerfällt. Die einzelnen Tröpfchen werden, je nachdem, ob eine Bildstelle bedruckt werden soll oder nicht, in einen Auffangbehälter abgelenkt oder auf das Aufnahmematerial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, bei dem ungeladene Tröpfchen im Auffangbehälter aufgefangen werden.
Beim nichtkontinuierlichen Verfahren, dem sogenannten "Drop on demand", werden die Tintentropfen nur dann erzeugt und aus der Düse ausgestossen, wenn auf Grund der digitalen Daten ein Bildpunkt dargestellt werden muss.
Heutige Tintenstrahldrucker müssen aus wirtschaftlichen Gründen immer schneller drucken können. Für solche Drucker geeignete Aufzeichnungsmaterialien müssen deshalb die Tinten besonders rasch aufnehmen können. Für diesen Zweck besonders geeignet sind Aufzeichnungsmaterialien, die nanokristalline, nanoporöse anorganische Verbindungen, vorzugsweise Oxide, insbesondere Aluminiumoxide oder Siliziumdioxid, oder Oxid/hydroxide, insbesondere Aluminiumoxid/hydroxide, enthalten.
Solche heute erhältlichen Aufzeichnungsmaterialien erfüllen nicht alle an sie gestellten Anforderungen. Insbesondere müssen die Lichtbeständigkeit und die Lagerbeständigkeit der auf diese Materialien gedruckten Bilder verbessert werden. Solche Bilder sind im Kontakt mit Aussenluft, die normalerweise Schwefeldioxid und, insbesondere aber im Sommer, photochemisch entstandene Verunreinigungen wie beispielsweise Ozon und/oder Stickstoffoxide enthält, auch unter Lichtausschluss, nicht besonders stabil. Sie werden im Kontakt mit der Aussenluft nämlich innerhalb kurzer Zeitspannen sehr stark verändert oder sogar zerstört. Diese Phänomene werden beispielsweise in "Ozone Problem with Epson Photo Paper", Hardcopy Supplies Journal, 6 (7), 35 (2000) beschrieben.
In der Patentanmeldung EP 0'685'345 wird zur Verbesserung der Aussenluftbeständigkeit von Bildern auf einem Aufzeichnungsmaterial, das nanoporöse anorganische Oxide oder Oxid/hydroxide enthält, der Zusatz von Dithiocarbamaten, Thiuramen, Thiocyanaten oder sterisch gehinderten Aminen vorgeschlagen.
In der Patentanmeldung EP 1'197'345 wird zur Verbesserung der Aussenluftbeständigkeit von Bildern auf einem Aufzeichnungsmaterial, das nanoporöse anorganische Oxide oder Oxid/hydroxide enthält, der Zusatz von unsubstituiertem oder substituiertem 1,3-Cyclohexandion vorgeschlagen.
In der Patentanmeldung EP 1'231'071 wird zur Verbesserung der Aussenluftbeständigkeit von Bildern auf einem Aufzeichnungsmaterial, das nanoporöse anorganische Oxide oder Oxid/hydroxide enthält, der Zusatz der Salze Kupfer(1)-Chlorid, Kupfer(I)-Bromid oder Kupfer(I)-Sulfit-Monohydrat vorgeschlagen.

Alle diese vorgeschlagenen Zusätze verbessern die Aussenluftbeständigkeit von Bildern auf Aufzeichnungsmaterialien, die nanoporöse anorganische Verbindungen enthalten, nur in ungenügendem Ausmass. Insbesondere werden alle als Reduktionsmittel wirkenden Zusätze rasch durch den Sauerstoff oder die Verunreinigungen der Aussenluft oxidiert und verlieren dadurch nach kurzer Zeit ihre stabilisierende Wirkung. Einige der vorgeschlagenen Zusätze können im Kontakt mit der verunreinigten Aussenluft auch in gefärbte Verbindungen übergeführt werden, was zu einer unerwünschten Verschlechterung des Weissgrades der Aufzeichnungsmaterialien oder der gedruckten Bilder führt.

In der Patentanmeldung DE 10'020'346 wird zur Verbesserung der Aussenluftbeständigkeit von Bildern auf einem Aufzeichnungsmaterial, das nanoporöses, nanokristallines Siliziumdioxid mit einer Primärpartikelgrösse von höchstens 20 nm enthält, die Modifikation der Oberfläche des Siliziumdioxids mit Polyaluminiumhydroxychlorid vorgeschlagen. Das Polyaluminiumhydroxychlorid kann mehrkernige polynukleare Aluminiumhydroxokationen wie [Al₆(OH)₁₅]³⁺, [Al₈(OH)₂₀]⁴⁺, [Al₁₃(OH)₃₄]⁵⁺ oder [Al₂₁(OH)₆₀]³⁺ enthalten.
In der Patentanmeldung EP 1'437'228 wird zur Verbesserung der Aussenluftbeständigkeit von Bildern auf einem Aufzeichnungsmaterial, das nanoporöses, nanokristallines Aluminiumoxid oder Aluminiumoxid/hydroxid enthält, die Modifikation der Oberfläche des Aluminiumoxids oder Aluminiumoxid/hydroxids mit Aluminiumchlorhydrat der Formel Al₂(OH)₅Cl · 2.5 H₂O vorgeschlagen.

Die vorgeschlagenen Verfahren der Oberflächenmodifikation verbessern die Aussenluftbeständigkeit von Bildern auf Aufzeichnungsmaterialien, die nanoporöse anorganische Verbindungen enthalten, noch nicht im gewünschten Ausmass. Weiter ist die Reproduzierbarkeit der Oberflächenmodifikation ungenügend, da sowohl Aluminiumchlorhydrat wie auch Polyaluminiumhydroxychlorid als Gemische nicht besonders gut definierte Verbindungen sind und auch Bestandteile enthalten, die unwirksam sind.

Es besteht daher weiterhin die Notwendigkeit, in Aufzeichnungsmaterialien, die nanokristalline, nanoporöse anorganische Verbindungen enthalten, neben dem Tintenaufnahmevermögen, der Tintenaufnahmegeschwindigkeit, der Bildqualität, der Wasserfestigkeit, der Lichtbeständigkeit usw. vor allem die Lagerbeständigkeit der Bilder im Kontakt mit Aussenluft, die Verunreinigungen wie beispielsweise Ozon, Stickstoffoxide oder Schwefeldioxid enthält, zu verbessern.

### Zusammenfassung der Erfindung

Ziel der Erfindung ist die Bereitstellung von Aufzeichnungsmaterialien mit verbesserter Lagerbeständigkeit der Bilder im Kontakt mit Aussenluft, bei denen das darauf aufgezeichnete Bild in Aufsicht oder Durchsicht betrachtet wird und welche aus einem Träger und mindestens einer darauf aufliegenden Tintenaufnahmeschicht bestehen, welche nanokristalline, nanoporöse anorganische Verbindungen enthält.
Wir haben nun überraschend gefunden, dass die Lagerbeständigkeit von Bildern auf solchen Aufzeichnungsmaterialien für den Tintenstrahldruck im Kontakt mit verunreinigter Aussenluft wesentlich verbessert wird, wenn das Aufzeichnungsmaterial neben den nanokristallinen, nanoporösen anorganischen Verbindungen einen polynuklearen Aluminiumhydroxokomplex mit 30 Aluminiumatomen enthält, welcher dem Aufzeichnungsmaterial als reine Substanz (Festsubstanz oder wässrige Lösung) zugesetzt wird. Die auf solchen erfindungsgemässen Aufzeichnungsmaterialien hergestellten Bilder zeigen im Kontakt mit Aussenluft, die Verunreinigungen wie beispielsweise Ozon, Stickstoffoxide oder Schwefeldioxid enthält, bedeutend weniger Farbänderungen und/oder Farbverluste als die entsprechenden Bilder auf Aufzeichnungsmaterialien, die keinen solchen Zusatz enthalten.
Der Aluminiumhydroxokomplex Al₃₀ mit 30 Aluminiumatomen enthält das Polykation [Al₃₀O₈(OH)₅₆(H₂O)₂₄]¹⁸⁺ (oder [Al₃₀O₈(OH)₅₆(H₂O)₂₆]¹⁸⁺) mit 30 Aluminiumatomen.
Bevorzugte nanoporöse, nanokristalline anorganische Verbindungen sind nanoporöses, nanokristallines Siliziumdioxid, nanoporöses, nanokristallines Aluminiumoxid oder nanoporöses, nanokristallines Aluminiumoxid/hydroxid.
Die erfindungsgemässen Aufzeichnungsmaterialien für den Tintenstrahldruck enthalten neben den nanokristallinen, nanoporösen anorganischen Verbindungen und einem polynuklearen Aluminiumhydroxokomplex Al₃₀ mit 30 Aluminiumatomen eines oder mehrere Bindemittel.

### Ausführliche Beschreibung der Erfindung

Es wurde nun gefunden, dass die Lagerbeständigkeit von Bildern auf Aufzeichnungsmaterialien für den Tintenstrahldruck im Kontakt mit verunreinigter Aussenluft wesentlich verbessert wird, wenn das Aufzeichnungsmaterial neben den nanokristallinen, nanoporösen anorganischen Verbindungen einen polynuklearen Aluminiumhydroxokomplex mit 30 Aluminiumatomen enthält
Bei Tintenaufnahmeschichten für den Tintenstrahldruck hat sich herausgestellt, dass nur der Zusatz von nanokristallinen, nanoporösen anorganischen Verbindungen, deren mittels der BET-Isotherme bestimmtes Porenvolumen ≥ 20 ml / 100 g ist, die Aufnahmegeschwindigkeit und die Aufnahmekapazität für wässrige Tinten wesentlich erhöht. Dieses BET-Verfahren ist eine Methode zur Messung der Oberfläche eines pulverförmigen Materials durch ein Gasphasenadsorptionsverfahren, bei dem die spezifische Oberfläche aus einer Adsorptionsisotherme bestimmt wird. Nur solche nanokristallinen anorganischen Verbindungen sollen als im weiteren als "nanoporös" betrachtet werden.

Der polynukleare Aluminiumhydroxokomplex Al₃₀ mit 30 Aluminiumatomen enthält das Polykation [Al₃₀O₈(OH)₅₆(H₂O)₂₄]¹⁸⁺ (oder [Al₃₀O₈(OH)₅₆(H₂O)₂₆]¹⁸⁺) mit 30 Aluminiumatomen.

Die Synthese und die Struktur des polynuklearen Aluminiumhydroxokomplexes Al₁₃ mit dem Polykation mit 13 Aluminiumatomen wird von G. Johansson, "On the Crystal Structure of some Basic Aluminium Salts", Acta Chemica Scandinavica 14, 771 - 773 (1960), von G. Johansson, "On the Crystal Structure of the Basic Aluminium Sulfate 13 · Al₂O₃ · 6SO₃ · x H₂O", Arkiv för kemi 20, 321 - 342 (1963) und von G. Johansson, "The Crystal Structure of a Basic Aluminium Selenate", Arkiv för kemi 20, 305 - 319 (1963) beschrieben.
Die Synthese und die Struktur des polynuklearen Aluminiumhydroxokomplexes Al₃₀ mit dem Polykation mit 30 Aluminiumatomen wird von G. Allouche, C. Gérardin, T. Loiseau, G. Féray und F. Taulelle, "Al₃₀: A Giant Aluminium Polycation", Angewandte Chemie 112, 521 - 524 (2000) und von J. Rowsell und L. F. Lazar, "Speciation and Thermal Transformation in Alumina Sols: Structures of the Polyhydroxyoxoaluminum Cluster [Al₃₀O₈(OH)₅₆(H₂O)₂₆]¹⁸⁺ and its δ-Keggin Moieté", Journal of the American Chemical Society 122, 3777 - 3778 (2000) beschrieben.

Die Menge des polynuklearen Aluminiumhydroxokomplexes Al₃₀ mit 30 Aluminiumatomen liegt zwischen 0.01 und 0.8 Molprozent bezogen auf die nanokristallinen, nanoporösen anorganischen Verbindungen, bevorzugt zwischen 0.1 und 0.6 Molprozent bezogen auf die nanokristallinen, nanoporösen anorganischen Verbindungen. Besonders bevorzugt ist der Bereich zwischen 0.1 und 0.4 Molprozent.
Der polynukleare Aluminiumhydroxokomplex Al₃₀ mit 30 Aluminiumatomen kann als Festsubstanz oder als wässrige Lösung zu den Beschichtungsmassen der nanoporösen Aufzeichnungsmaterialien zugesetzt werden. Es ist auch möglich, den polynuklearen Aluminiumhydroxokomplex Al₃₀ mit 30 Aluminiumatomen durch Eintauchen eines nanoporösen Aufzeichnungsmaterials in eine wässrige Lösung des polynuklearen Aluminiumhydroxokomplexes Al₃₀, durch Aufsprühen einer wässrigen Lösung des polynuklearen Aluminiumhydroxokomplexes Al₃₀ oder den Auftrag mit Hilfe eines Rakels in das erfindungsgemässe Aufzeichnungsmaterial einzubringen.
Die Zugabe geschieht vorzugsweise so, dass der polynukleare Aluminiumhydroxokomplex Al₃₀ mit 30 Aluminiumatomen als Festsubstanz oder als wässrige Lösung zu den wässrigen Dispersionen der nanokristallinen, nanoporösen anorganischen Verbindung zugegeben wird, die erhaltene Mischung während einer gewissen Zeit bei erhöhter Temperatur gehalten wird und anschliessend die weiteren Zusätze wie Bindemittel, Netzmittel usw. zugegeben werden. Vorzugsweise wird dabei direkt die wässrige Lösung des polynuklearen Aluminiumhydroxokomplexes Al₃₀ verwendet, wie sie bei der Herstellung des polynuklearen Aluminiumhydroxokomplexes Al₃₀ mit 30 Aluminiumatomen erhalten wird.
Als nanokristalline, nanoporöse anorganische Verbindungen werden vor allem nanokristallines, nanoporöses Siliziumdioxid, nanokristallines, nanoporöses Aluminiumoxid und nanokristallines, nanoporöses Aluminiumoxid/hydroxid verwendet. Besonders geeignet sind nanokristalline, nanoporöse anorganische Verbindungen mit einem isoelektrischen Punkt unter dem pH-Wert 4.0.
Das in den Aufzeichnungsmaterialien oft verwendete nanokristalline, nanoporöse Aluminiumoxid/hydroxid wird normalerweise nach einem Sol-Gel-Verfahren, wie es beispielsweise in C. F. Brinker, G. W. Scherrer "Sol-Gel Science", Verlag Academic Press, 1990, ISBN 0-12-134970-5, Seiten 59 - 78 beschrieben wird, hergestellt. Diese Verfahren enthalten stets eine Verfahrensstufe, in der während oder nach der Hydrolyse von Aluminiumisopropoxid eine wasserlösliche Säure, beispielsweise Salpetersäure, Essigsäure oder Milchsäure, zugesetzt wird.
Im Patent DE 3'823'895 wird ein Herstellungsverfahren für kolloidales Aluminiumoxid/hydroxid beschrieben, bei dem der ganze Sol-Gel-Herstellungsprozess in Abwesenheit von Säuren stattfindet.
Bevorzugt werden nanokristalline, nanoporöse Aluminiumoxide oder Aluminiumoxid/hydroxide, die in einem Verfahren in gänzlicher Abwesenheit von Säure hergestellt wurden.
Bevorzugt als nanokristallines, nanoporöses Aluminiumoxid ist γ-Al₂O₃ und als nanokristallines, nanoporöses AIOOH mit Salzen der seltenen Erden umgesetztes AIOOH, wie es in der Patentanmeldung EP 0'875'394 beschrieben worden ist. Dieses nanokristalline, nanoporöse Aluminiumoxid/hydroxid enthält ein oder mehrere Elemente der Ordnungszahl 57 bis 71 des Periodischen Systems der Elemente, bevorzugt in einer Menge zwischen 0.2 und 2.5 Molprozent bezogen auf Al₂O₃. Besonders bevorzugt als nanokristallines, nanoporöses Aluminiumoxid/hydroxid ist Pseudo-Böhmit, ein Agglomerat von Aluminiumoxid/hydroxid der Formel Al₂O₃· n H₂O (n = 1 bis 1.5), oder mit Salzen der seltenen Erden umgesetzter Pseudo-Böhmit, wie ebenfalls in der Patentanmeldung EP 0'875'394 beschrieben worden ist. Dieser nanokristalline, nanoporöse Pseudo-Böhmit enthält ein oder mehrere Elemente der Ordnungszahl 57 bis 71 des Periodischen Systems der Elemente, bevorzugt in einer Menge zwischen 0.2 und 2.5 Molprozent bezogen auf Al₂O₃.

Eine weitere bevorzugte nanokristalline, nanoporöse anorganische Verbindung in Aufzeichnungsmaterialien für den Tintenstrahldruck ist nanokristallines, nanoporöses Siliziumdioxid.
Es können zwei verschiedene Arten von nanokristallinem, nanoporösem Siliziumdioxid verwendet werden, ein in einem Nassverfahren hergestelltes ausgefälltes Siliziumdioxid und ein in einem Gasphasenverfahren hergestelltes staubförmiges Siliziumdioxid. Dieses staubförmige Siliziumdioxid wird im allgemeinen in einem Flammenhydrolyseverfahren hergestellt, beispielsweise durch Verbrennung von Siliziumtetrachlorid mit Wasserstoff und Sauerstoff. Beispiel eines solchen staubförmigen Siliziumdioxids ist Aerosil 200 (SiO₂ mit einem isoelektrischen Punkt bei pH 2.0), erhältlich bei DEGUSSA AG, Frankfurt/Main, Deutschland.
In der vorliegenden Erfindung wird vorzugsweise staubförmiges Siliziumdioxid mit einer durchschnittliche Partikelgrösse von höchstens 20 nm und einer spezifischen Oberfläche von mindestens 200 m²/g, bestimmt mit dem BET-Verfahren, verwendet.

Das Aufzeichnungsmaterial kann neben den nanokristallinen, nanoporösen anorganischen Verbindungen zusätzlich noch andere, nach der obigen Definition nicht nanoporöse, nanokristalline anorganische Verbindungen enthalten.

In einer bevorzugten Form der Erfindung enthält das erfindungsgemässe Aufzeichnungsmaterial neben den nanokristallinen, nanoporösen anorganischen Verbindungen und einem polynuklearen Aluminiumhydroxokomplex Al₃₀ mit 30 Aluminiumatomen zusätzlich noch Salze des einwertigen Kupfers wie Kupfer(I)-Chlorid, Kupfer(I)-Bromid oder Kupfer(I)-Sulfit-Monohydrat, wie es in der Patentanmeldung EP 1'231'071 beschrieben worden ist.

Es ist besonders bevorzugt, wenn dem erfindungsgemässen Aufzeichnungsmaterial neben den nanokristallinen, nanoporösen anorganischen Verbindungen, einem polynuklearen Aluminiumhydroxokomplex Al₃₀ mit 30 Aluminiumatomen und den Salzen des einwertigen Kupfers noch Verbindungen der Formeln la (Diketonform) und Ib (Enolform), wie in der Patentanmeldung EP 1'197'345 beschrieben worden ist, zugesetzt werden, 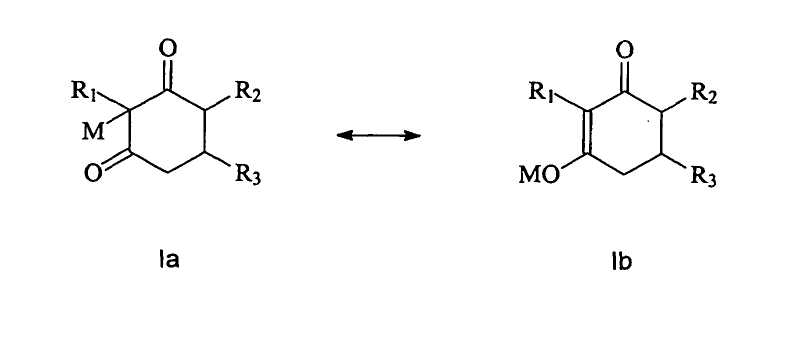 worin in den Formeln la und Ib
- M: für ein Wasserstoffkation, ein Metallkation wie Li, Na oder K, ein Triethanolaminkation oder ein Ammoniumkation steht, das gegebenenfalls einen oder mehrere Alkylreste oder substituierte Alkylreste mit jeweils 1 bis 18 C-Atomen aufweist;
- R₁: für Wasserstoff, einen Alkylrest mit 1 bis 12 C-Atomen oder einen substituierten Alkylrest mit 2 bis 6 C Atomen steht, wobei die Substituenten aus der Gruppe bestehend aus CN, COOH, OH und COOR₄ ausgewählt werden, worin R₄ für einen Alkylrest mit 1 bis 12 C-Atomen steht
und
- R₂, R₃: unabhängig voneinander für Wasserstoff, einen Alkylrest mit 1 bis 6 C-Atomen oder einen substituierten Alkylrest mit 2 bis 6 C Atomen stehen, wobei die Substituenten aus der Gruppe bestehend aus CN, COOH, OH und COOR₅ ausgewählt werden, worin R₅ für einen Alkylrest mit 1 bis 12 C-Atomen steht.

In einer weiteren bevorzugten Form der Erfindung enthält das Aufzeichnungsmaterial neben den nanokristallinen, nanoporösen anorganischen Verbindungen und einem polynuklearen Aluminiumhydroxokomplex Al₃₀ mit 30 Aluminiumatomen zusätzlich noch organische Schwefelverbindungen wie beispielsweise Thiodiethylenglykol.

Die Bindemittel sind im allgemeinen wasserlösliche Polymere. Besonders bevorzugt sind filmbildende Polymere.
Die wasserlöslichen Polymere umfassen beispielsweise natürliche oder daraus hergestellte modifizierte Verbindungen wie Albumin, Gelatine, Kasein, Stärke, Gummi arabicum, Natrium- oder Kaliumalginat, Hydroxyethylcellulose, Carboxymethylcellulose, α-, β- oder γ-Cyclodextrin usw. Wenn eines der wasserlöslichen Polymere Gelatine ist, so können alle bekannten Gelatinetypen verwendet werden, wie saure Schweinehautgelatine oder alkalische Knochengelatine, sauer oder basisch hydrolysierte Gelatinen, wie auch substituierte Gelatinen, beispielsweise phthalierte, acetylierte oder carbamoylierte Gelatine, oder mit Trimellithsäureanhydrid umgesetzte Gelatine.
Ein bevorzugtes natürliches Bindemittel ist Gelatine.
Synthetische Bindemittel können ebenfalls verwendet werden und umfassen beispielsweise Polyvinylalkohol, Polyvinylpyrrolidon, vollständig oder teilweise verseifte Verbindungen von Copolymeren aus Vinylacetat und anderen Monomeren; Homopolymere oder Copolymere von ungesättigten Carbonsäuren wie Maleinsäure, (Meth)acrylsäure, Crotonsäure usw.; Homopolymere oder Copolymere aus sulfonierten Vinylmonomeren wie beispielsweise Vinylsulfonsäure, Styrolsulfonsäure usw. Ebenfalls können Homopolymere oder Copolymere aus Vinylmonomeren von (Meth)acrylamid; Homopolymere oder Copolymere anderer Monomerer mit Ethylenoxid; Polyurethane; Polyacrylamide; wasserlösliche Nylonpolymere; Polyester; Polyvinyllactame; Acrylamidpolymere; substituierter Polyvinylalkohol; Polyvinylacetale; Polymere aus Alkyl- und Sulfoalkylacrylaten und -methacrylaten; hydrolysierte Polyvinylacetate; Polyamide; Polyvinylpyridine; Polyacrylsäure; Copolymere mit Maleinsäureanhydrid; Polyalkylenoxide; Copolymere mit Methacrylamid und Copolymere mit Maleinsäure eingesetzt werden. Alle diese Polymere können auch als Mischungen verwendet werden.
Bevorzugte synthetische Bindemittel sind Polyvinylalkohol und Polyvinylpyrrolidon oder ihre Mischungen.
Diese Polymere können mit wasserunlöslichen natürlichen oder synthetischen hochmolekularen Verbindungen gemischt werden, insbesondere mit Acryllatices oder Styrolacryllatices.
Obwohl wasserunlösliche Bindemittel nicht explizit beansprucht werden, so sollen wasserunlösliche Polymere trotzdem als Systembestandteil angesehen werden.
Die oben erwähnten Polymere mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie beispielsweise der Flüssigkeitsaufnahme, oder der Widerstandsfähigkeit gegen Schichtverletzungen.
Die Vernetzer und Härter werden auf Grund der zu vernetzenden wasserlöslichen Polymere ausgesucht.
Organische Vernetzer und Härter umfassen z. B. Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)ethylether), reaktive Halogenverbindungen (wie 2,4-Dichloro-6-Hydroxy-s-Triazin); Epoxide; Aziridine; Carbamoylpyridinverbindungen oder Mischungen zweier oder mehrere dieser erwähnten Vernetzer.
Anorganische Vernetzer und Härter umfassen beispielsweise Chromalaun, Aluminiumalaun oder Borsäure.
Die Schichten können auch reaktive Substanzen enthalten, welche die Schichten unter Einwirkung von UV-Licht, Elektronenstrahlen, Röntgenstrahlen oder Wärme vernetzen.

Die Schichten können weiter durch den Zusatz von Füllstoffen modifiziert werden. Mögliche Füllstoffe sind z. B. Kaolin, Ca- oder Ba-Carbonate, Siliziumdioxid, Titandioxid, Bentonite, Zeolite, Aluminiumsilikat, Calciumsilikat oder kolloidales Siliziumdioxid. Auch inerte organische Partikeln wie beispielsweise Kunststoffkügelchen können verwendet werden. Diese Kügelchen können aus Polyacrylaten, Polyacrylamiden, Polystyrol oder verschiedenen Copolymeren aus Acrylaten und Styrol bestehen. Die Füllstoffe werden auf Grund des beabsichtigten Gebrauchs der hergestellten Bilder ausgewählt. Einige dieser Füllstoffe können in transparenten Materialien nicht verwendet werden. Sie können aber positive Wirkungen in Aufsichtsmaterialien besitzen. Sehr oft erreicht man mit dem Einsatz solcher Füllstoffe eine gewünschte matte Oberfläche.
Die Aufzeichnungsmaterialien können weitere lösliche Metallsalze enthalten, beispielsweise Erdalkalisalze oder Salze der seltenen Erden.
In den erfindungsgemässen Aufzeichnungsmaterialien ist mindestens eine Tintenaufnahmeschicht nebst allfälligen Hilfsschichten auf einen Träger aufgebracht.
Eine grosse Vielfalt an Trägern ist bekannt und wird auch eingesetzt. So können alle Träger, die bei der Herstellung von photographischen Materialien verwendet werden, eingesetzt werden. Verwendet werden beispielsweise transparente Träger aus Celluloseestern wie Cellulosetriacetat, Celluloseacetat, Cellulosepropionat, oder Celluloseacetat/butyrat, Polyester wie Polyethylenterephthalat oder Polyethylennaphthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat oder Polyethylennaphthalat wegen ihrer ausgezeichneten Dimensionsstabilität. Bei den in der photographischen Industrie eingesetzten opaken Trägern können beispielsweise Barytpapier, mit Polyolefinen beschichtete Papiere, weissopake Polyester wie z. B. Melinex® der Firma DuPont eingesetzt werden. Besonders bevorzugt sind polyolefinbeschichtete Papiere oder weissopaker Polyester.
Es ist vorteilhaft, diese Träger, insbesondere Polyester, vor dem Beguss mit einer Substrierschicht zu versehen, um die Haftung der Tintenaufnahmeschichten auf dem Träger zu verbessern. Solche Substrierschichten sind in der photographischen Industrie wohlbekannt und enthalten z. B. Terpolymere aus Vinylidenchlorid, Acrylnitril und Acrylsäure oder aus Vinylidenchlorid, Methylacrylat und Itaconsäure. An Stelle der Substrierschicht können die Träger vor dem Beguss auch einer Coronaentladung ausgesetzt werden.
Ebenfalls als Träger können unbeschichtete Papiere verschiedener Typen verwendet werden, die in ihrer Zusammensetzung und in ihren Eigenschaften grosse Unterschiede aufweisen können. Pigmentierte Papiere und Hochglanzpapiere können ebenfalls verwendet werden, wie auch Metallfolien beispielsweise aus Aluminium.
Die Schichten können ebenfalls auf textile Fasermaterialien aus beispielsweise Polyamiden, Polyester, Baumwolle, Viskose und Wolle aufgebracht werden.
Die erfindungsgemässen Tintenaufnahmeschichten werden im allgemeinen aus wässrigen Lösungen oder Dispersionen, die alle nötigen Komponenten enthalten, gegossen. In vielen Fällen werden Netzmittel als Begusshilfsmittel zugesetzt, um das Giessverhalten und die Schichtgleichmässigkeit zu verbessern. Neben ihrer Wirkung während des Giessvorgangs können diese Verbindungen auch einen Einfluss auf die Bildqualität haben und können deshalb dementsprechend ausgewählt werden. Obwohl solche oberflächenaktiven Verbindungen in der Erfindung nicht beansprucht werden, bilden sie trotzdem einen wesentlichen Bestandteil der Erfindung.
Zusätzlich zu den schon erwähnten Bestandteilen können die erfindungsgemässen Aufzeichnungsmaterialien zusätzliche Verbindungen enthalten, um seine Eigenschaften weiter zu verbessern, so beispielsweise optische Aufheller zur Verbesserung des Weissgrades, wie Stilbene, Cumarine, Triazine, Oxazole oder weitere dem Fachmann bekannte Verbindungen.
Zur Verbesserung der Lichtechtheit können UV-Absorber, wie 2-Hydroxybenztriazole, 2-Hydroxybenzophenone, Triazin-Derivate oder Zimtsäure-Derivate. Die Menge des UV-Absorbers beträgt 200 mg/m² bis 2000 mg/m², vorzugsweise 400 mg/m² bis 1000 mg/m². Der UV-Absorber kann in jede Schicht des erfindungsgemässen Aufzeichnungsmaterials eingebracht werden, besonders vorteilhaft ist aber, wenn er in die oberste Schicht eingebracht wird.
Es ist weiter bekannt, dass die im Tintenstrahldruck hergestellten Bilder durch den Zusatz von Radikalfängern, Stabilisatoren, Reduktionsmitteln und Antioxidantien geschützt werden können. Beispiele solcher Verbindungen sind sterisch gehinderte Phenole, sterisch gehinderte Amine, Chromanole, Ascorbinsäure, Phosphinsäuren und deren Derivate, schwefelhaltige Verbindungen wie Sulfide, Mercaptane, Thiocyanate, Thioamide oder Thioharnstoffe.
Die erwähnten Verbindungen können als wässrige Lösungen zu den Giesslösungen zugesetzt werden. Falls die Verbindungen nicht genügend wasserlöslich sind, können sie durch andere, bekannte Verfahren in die Giesslösungen eingebracht werden. So können die Verbindungen beispielsweise in einem mit Wasser mischbaren organischen Lösungsmittel wie niedere Alkohole, Glykole, Ketone, Ester oder Amide gelöst werden. Es ist auch möglich, die Verbindungen als feinkörnige Dispersionen, als Ölemulsionen, als Cyclodextran-Einschlussverbindungen oder als Latex, der die Verbindung enthält, in die Giesslösung einzubringen.
Normalerweise hat das erfindungsgemässe Aufzeichnungsmaterial eine Trockenschichtdicke von 0.5 *µ*m bis 100 *µ*m, insbesondere aber von 5 *µ*m bis 50 *µ*m.

Die Giesslösungen können auf verschiedene Arten auf den Träger aufgebracht werden. Die Giessverfahren schliessen beispielsweise den Extrusionsguss, den Luftmesserguss, den Schlitzguss, den Kaskadenguss und den Vorhangguss ein. Die Giesslösungen können auch mit einem Sprühverfahren aufgebracht werden. Die Tintenaufnahmeschichten können aus mehreren Einzelschichten bestehen, die einzeln nacheinander oder gemeinsam aufgebracht werden können. Ein Träger kann auch beidseitig mit Tintenaufnahmeschichten begossen werden. Es ist auch möglich, auf der Rückseite eine antistatische Schicht oder eine Schicht zur Verbesserung der Planlage aufzubringen. Das gewählte Giessverfahren schränkt die Erfindung aber in keiner Art und Weise ein.

Tinten für den Tintenstrahldruck bestehen im wesentlichen aus einer flüssigen Trägersubstanz und einem darin gelösten oder dispergierten Farbstoff oder Pigment. Die flüssige Trägersubstanz für Tintenstrahldrucktinten ist im allgemeinen Wasser oder eine Mischung aus Wasser und einem mit Wasser mischbaren Lösungsmittel wie Ethylenglykol, Glykole mit höherem Molekulargewicht, Glycerin, Dipropylenglykol, Polyethylenglykol, Amide, Polyvinylpyrrolidon, N-Methylyrrolidon, Cyclohexylpyrrolidon, Carbonsäuren und deren Ester, Ether, Alkohole, organische Sulfoxide, Sulfolan, Dimethylformamid, Dimethylsulfoxid, Cellosolve, Polyurethane, Acrylate usw.
Die nichtwässrigen Tintenbestandteile dienen allgemein als Feuchthalter, Hilfslösungsmittel, Viskositätsregler, Eindringhilfsmittel oder Trocknungsbeschleuniger. Die organischen Verbindungen besitzen meistens einen Siedepunkt, der über dem von Wasser liegt. Tinten für den kontinuierlichen Tintenstrahldruck können weiter anorganische oder organische Salze zur Erhöhung der Leitfähigkeit enthalten. Beispiele solcher Salze sind Nitrate, Chloride, Phosphate, und die wasserlöslichen Salze wasserlöslicher organischer Säuren wie Acetate, Oxalate und Citrate. Die Farbstoffe oder Pigmente, die zur Herstellung der zusammen mit den erfindungsgemässen Aufzeichnungsmaterialien verwendbaren Tinten eingesetzt werden können, enthalten praktisch alle bekannten Klassen dieser farbigen Verbindungen. Typische Beispiele verwendeter Farbstoffe oder Pigment sind in der Patentanmeldung EP 0'559'324 aufgeführt. Die erfindungsgemässen Aufzeichnungsmaterialien können mit fast allen dem Stand der Technik entsprechenden Tinten verwendet werden.
Zusätzlich können die Tinten weitere Zusätze enthalten wie oberflächenaktive Substanzen, optische Aufheller, UV-Absorber, Lichtstabilisatoren, Konservierungsmittel, Fällmittel wie mehrfach geladene Metallverbindungen und polymere Verbindungen.
Die Beschreibung der Tinten dient nur als Illustration und ist in Bezug auf die Erfindung in keiner Weise einschränkend.

Die vorliegende Erfindung wird durch die folgenden Beispiele näher beschrieben, ohne dass sie dadurch in irgendeiner Weise eingeschränkt würde.

### Prüfungen

Auf die erfindungsgemässen Aufzeichnungsmaterialien wurden mit einem Tintenstrahldrucker EPSON SP 890 mit Originaltinten Farbfelder mit Dichten zwischen 0.3 und 1.3 in den Farben Blaugrün, Purpur, Gelb und Dreifarbenschwarz 3K gedruckt.
Die folgenden Verfahren wurden zur Bestimmung der Beständigkeit gegen ozonhaltige Luft oder verunreinigte Aussenluft der im folgenden beschriebenen Aufzeichnungsmaterialien verwendet.

### 1. Ozon-Beständigkeit

Die bedruckten Muster wurden während 15 bis 60 Minuten in einem geschlossenen Kasten bei einer Temperatur zwischen 20° C und 25° C sowie einer relativen Feuchtigkeit zwischen 35 % und 70 % im Dunkeln unter moderater Zirkulation von ozonhaltiger Luft (300 ppm Ozon) gelagert.

### 2. Simulierte Aussenluft-Beständigkeit

Die bedruckten Muster wurden eine bestimmte Zeit in einem geschlossenen Schrank bei einer Temperatur zwischen 20° C und 25° C sowie einer relativen Feuchtigkeit zwischen 35 % und 70 % im Dunkeln unter moderater Zirkulation von (verunreinigter) Aussenluft gelagert.

Die Dichten der gedruckten Farbfelder wurden vor und nach der Lagerung mit einem X-Rite®-Densitometer gemessen. Die Dichtverluste werden als prozentuale Dichteverluste für die einzelnen Farbfelder und als prozentualer Dichteverluste für die Blaugrünkomponente des Dreifarbenschwarz 3K ausgehend von der ursprünglichen Dichte angegeben. Für die Auswertung herangezogen wurden die Farbfelder mit Dichten zwischen 0.3 und 1.0.

### Beispiele

### Beispiel 1

### Giesslösung

38.0 g Aluminiumoxid/hydroxid der Formel AIOOH, das nach der Vorschrift von Beispiel 1 der Patentanmeldung DE 3'823'895 in Abwesenheit von Säure hergestellt worden war, wurden bei einer Temperatur von 40° C unter guter mechanischer Rührung in 104 g wässriger Milchsäurelösung (1.7 %) dispergiert. Nach guter mechanischer Rührung während weiteren 2 Stunden wurden 11.4 g einer wässrigen Lösung von Polyvinylalkohol mit einem Hydrolysegrad von 88 % (10 %, Molekulargewicht 72'000, erhältlich als Moviol 2688 bei Clariant AG, Muttenz, Schweiz) und 25.4 g einer wässrigen Lösung von Polyvinylalkohol mit einem Hydrolysegrad von 98 % (9 %, Molekulargewicht 195'000, erhältlich als Moviol 5698 bei Clariant AG, Muttenz, Schweiz) zugegeben. Das Endgewicht der Giesslösung wurde mit deionisiertem Wasser auf 200 g eingestellt und die Lösung 30 Sekunden mit Ultraschall behandelt.

### Guss

140 g/m² der obigen Giesslösung wurden bei einer Temperatur von 40° C auf einen polyethylenbeschichteten Papierträger aufgebracht und anschliessend wurde der begossene Träger 60 Minuten bei einer Temperatur von 30° C getrocknet. 1 m² des begossenen Trägers enthält 21.1 g nanokristallines, nanoporöses Aluminiumoxid/hydroxid, berechnet als Al₂O₃, und 2.39 g Polyvinylalkohol.

### Zusatz des polynuklearen Aluminiumhydroxokomplexes Al₃₀

Auf das obige Aufzeichnungsmaterial wurden auf ein A5-Blatt mit Hilfe eines Rakels 15 Mikromol des polynuklearen Aluminiumhydroxokomplexes Al₃₀ als wässrige Lösung aufgetragen. Anschliessend wurde das Aufzeichnungsmaterial wieder getrocknet. Die wässrige Lösung des polynuklearen Aluminiumhydroxokomplexes Al₃₀ wurde gemäss der Vorschrift von J. Rowsell und L. F. Lazar, "Speciation and Thermal Transformation in Alumina Sols: Structures of the Polyhydroxyoxoaluminum Cluster [Al₃₀O₈(OH)₅₆(H₂O)₂₆]¹⁸⁺ and its δ-Keggin Moieté", Journal of the American Chemical Society 122, 3777 - 3778 (2000) hergestellt.

### Vergleichsbeispiel C - 1

Auf das Aufzeichnungsmaterial aus Beispiel 1 wurde an Stelle der wässrigen Lösung des polynuklearen Aluminiumhydroxokomplexes Al₃₀ eine wässrige Lösung von Natriumchlorid der gleichen Konzentration und dem gleichen pH-Wert aufgetragen. Anschliessend wurde das Aufzeichnungsmaterial wieder getrocknet.

### Vergleichsbeispiel C -1a

Auf das Aufzeichnungsmaterial aus Beispiel 1 wurden auf ein A5-Blatt mit Hilfe eines Rakels 28 Mikromol des polynuklearen Aluminiumhydroxokomplexes Al₁₃ als wässrige Lösung aufgetragen. Anschliessend wurde das Aufzeichnungsmaterial wieder getrocknet. Die wässrige Lösung des polynuklearen Aluminiumhydroxokomplexes Al₁₃ wurde nach der Vorschrift von G. Johansson, "On the Crystal Structure of some Basic Aluminium Salts", Acta Chemica Scandinavica 14, 771 - 773 (1960) hergestellt.

### Beispiel 2

### Herstellung einer wässrigen Dispersion von negativ geladenem SiO₂ (13.5 Gewichtsprozent)

1.48 g Natriumhydroxid wurden bei einer Temperatur von 20° C unter Rühren in 85 g deionisiertem Wasser gelöst. Anschliessend wurde die Lösung auf eine Temperatur von 40° C aufgeheizt, 13.5 g Aerosil 200 wurden zugegeben, das Gemisch unter Ultraschallbehandlung dispergiert und zum Schluss filtriert. Die entstandene Lösung enthält 13.5 Gewichtsprozent an negativ geladenem SiO₂.

### Herstellung der Giesslösung

8.0 g einer wässrigen Lösung des Polyvinylalkohols Moviol 2688 (10 %) und 13.33 g einer wässrigen Lösung des Polyvinylalkohols Moviol 5698 (9 %) wurden zusammen mit 4.6 g deionisiertem Wasser gut vermischt. Anschliessend wurde die Lösung auf eine Temperatur von 40° C aufgeheizt, 74.0 g der obigen wässrigen Dispersion von negativ geladenem SiO₂ unter guter mechanischer Rührung zugegeben und die Lösung nach Einstellung des Endgewichts mit deionisiertem Wasser auf 100 g unter Ultraschallbehandlung dispergiert.

### Guss

180 g/m² der obigen Giesslösung wurden bei einer Temperatur von 40° C auf einen polyethylenbeschichteten Papierträger aufgebracht und anschliessend wurde der begossene Träger 60 Minuten bei einer Temperatur von 30° C getrocknet. 1 m² des begossenen Trägers enthält 18 g SiO₂ und 3.6 g Polyvinylalkohol.

### Zusatz des polynuklearen Aluminiumhydroxokomplexes Al₃₀

Auf das obige Aufzeichnungsmaterial wurden auf ein A5-Blatt mit Hilfe eines Rakels 15 oder 42 Mikromol des polynuklearen Aluminiumhydroxokomplexes Al₃₀ als wässrige Lösung aufgetragen. Anschliessend wurde das Aufzeichnungsmaterial wieder getrocknet.

### Vergleichsbeispiel C - 2

Auf das Aufzeichnungsmaterial aus Beispiel 2 wurde an Stelle der wässrigen Lösung des polynuklearen Aluminiumhydroxokomplexes Al₃₀ eine wässrige Lösung von Natriumchlorid der gleichen Konzentration und dem gleichen pH-Wert aufgetragen. Anschliessend wurde das Aufzeichnungsmaterial wieder getrocknet.

### Vergleichsbeispiel C - 2a

Auf das Aufzeichnungsmaterial aus Beispiel 2 wurden auf ein A5-Blatt mit Hilfe eines Rakels 28 Mikromol des polynuklearen Aluminiumhydroxokomplexes Al₁₃ als wässrige Lösung aufgetragen. Anschliessend wurde das Aufzeichnungsmaterial wieder getrocknet.

### Beispiel 3

### Herstellung einer wässrigen Dispersion von positiv geladenem SiO₂ durch Zusatz des polynuklearen Aluminiumhydroxokomplexes Al ₃₀ (13.9 Gewichtsprozent)

Zu 86 g einer wässrigen Lösung des polynuklearen Aluminiumhydroxokomplexes Al₃₀ mit dem Polykation der Formel [Al₃₀O₈(OH)₅₆(H₂O)₂₆]¹⁸⁺ (1.65 %) wurden bei einer Temperatur von 20° C unter Rühren 13.9 g Aerosil 200 zugegeben. Anschliessend wurde die Dispersion auf eine Temperatur von 40° C aufgeheizt und das Gemisch unter Ultraschallbehandlung fein dispergiert.

### Herstellung der Giesslösung

21.6 g einer wässrigen Lösung des Polyvinylalkohols Moviol 2688 (10 %) wurden mit 16.3 g deionisiertem Wasser gut vermischt. Anschliessend wurde die Lösung auf eine Temperatur von 40° C aufgeheizt, 62.1 g der obigen wässrigen Dispersion von positiv geladenem SiO₂ unter guter mechanischer Rührung zugegeben und die Lösung unter Ultraschallbehandlung dispergiert.

### Guss

200 g/m² der obigen Giesslösung wurden bei einer Temperatur von 40° C auf einen polyethylenbeschichteten Papierträger aufgebracht und anschliessend wurde der begossene Träger 60 Minuten bei einer Temperatur von 30° C getrocknet. 1 m² des begossenen Trägers enthält 17.3 g SiO₂ und 4.32 g Polyvinylalkohol.

### Vergleichsbeispiel C - 3

### Herstellung einer wässrigen Dispersion von positiv geladenem SiO₂ (11.5 Gewichtsprozent SiO₂ (pos))

Diese Dispersion wurde nach der Vorschrift des Patents US 3'007'878 hergestellt: 1.30 g Aluminiumchlorhydrat der Formel Al₂(OH)₅Cl · 2.5 H₂O (Locron, erhältlich bei Clariant AG, Muttenz, Schweiz) wurde bei einer Temperatur von 20° C unter Rühren in 87 g deionisiertem Wasser gelöst. Anschliessend wurde die Lösung auf eine Temperatur von 40° C aufgeheizt, 11.5 g Aerosil 200 wurden zugegeben, das Gemisch unter Ultraschallbehandlung dispergiert und zum Schluss filtriert.

### Herstellung der Giesslösung

20.4 g einer wässrigen Lösung des Polyvinylalkohols Moviol 2688 (10 %) wurden mit 8.6 g deionisiertem Wasser gut gemischt. Anschliessend wurde die Lösung auf eine Temperatur von 40° C aufgeheizt, 71.0 g der obigen wässrigen Dispersion von positiv geladenem SiO₂ unter guter mechanischer Rührung zugegeben und die Lösung unter Ultraschallbehandlung dispergiert.

### Guss

243 g/m² der obigen Giesslösung wurden bei einer Temperatur von 40° C auf einen polyethylenbeschichteten Papierträger aufgebracht und anschliessend wurde der begossene Träger 60 Minuten bei einer Temperatur von 30° C getrocknet. 1 m² des begossenen Trägers enthält 21 g SiO₂ und 4.95 g Polyvinylalkohol.

### Ergebnisse

Die unter den oben angegeben Versuchsbedingungen erhaltenen Dichteverluste für die Ozon-Beständigkeit für Aufzeichnungsmaterialien, welche den polynuklearen Aluminiumhydroxokomplex A₁₃ enthalten, sind in Tabelle 1 zusammengestellt. Die Einwirkungszeit betrug 30 Minuten.

**Tabelle 1**

| Beispiel | Menge Al₁₃ (Molprozent) | Farbdichteverlust in % | | |
|---|---|---|---|---|
| | | Blaugrün | Purpur | Gelb |
| C - 1a | 0.43 | 13 | 14 | 3 |
| C - 1 | - | 17 | 23 | 5 |
| C - 3a | 0.41 | 21 | 17 | 3 |
| C - 3 | - | 28 | 17 | 4 |

Der Vergleich der Ergebnisse in Tabelle 1 zeigt sofort, dass die Aufzeichnungsmaterialien für den Tintenstrahldruck, auf die der polynukleare Aluminiumhydroxokomplex A₁₃ aufgebracht worden war (Vergleichsbeispiele C - 1a und C - 3a), geringere Dichteverluste aller Farbstoffe zeigen als die entsprechenden Aufzeichnungsmaterialien, welche den polynuklearen Aluminiumhydroxokomplex A₁₃ nicht enthalten (Vergleichsbeispiele C - 1 und C - 3). Die Verbesserung der Ozonbeständigkeit ist mit der nanokristallinen, nanoporösen anorganischen Verbindung Siliziumdioxid wesentlich besser als mit Aluminiumoxid/hydroxid.

Die unter den oben angegeben Versuchsbedingungen erhaltenen Dichteverluste für die Ozon-Beständigkeit für erfindungsgemässe Aufzeichnungsmaterialien, welche den polynuklearen Aluminiumhydroxokomplex A₃₀ enthalten, sind in Tabelle 2 zusammengestellt. Die Einwirkungszeit betrug 30 Minuten.

**Tabelle 2**

| Beispiel | Menge Al₃₀ (Molprozent) | Farbdichteverlust in % | | |
|---|---|---|---|---|
| | | Blaugrün | Purpur | Gelb |
| 1 | 0.18 | 9 | 12 | 2 |
| C - 1 | - | 17 | 23 | 5 |
| 2 | 0.18 | 12 | 8 | 5 |
| C - 3 | - | 28 | 17 | 4 |

Der Vergleich der Ergebnisse in Tabelle 2 zeigt sofort, dass die erfindungsgemässen Aufzeichnungsmaterialien für den Tintenstrahldruck, auf die der polynukleare Aluminiumhydroxokomplex A₃₀ aufgebracht worden war (Beispiele 1 und 2), wesentlich geringere Dichteverluste der Farbstoffe Blaugrün und Purpur zeigen als die entsprechenden Aufzeichnungsmaterialien, welche den polynuklearen Aluminiumhydroxokomplex A₃₀ nicht enthalten (Vergleichsbeispiele C - 1 und C - 2). Die Verbesserung der Ozonbeständigkeit ist mit der nanokristallinen, nanoporösen anorganischen Verbindung Siliziumdioxid wesentlich besser als mit Aluminiumoxid/hydroxid.

Die unter den oben angegeben Versuchsbedingungen erhaltenen Dichteverluste für die Ozon-Beständigkeit für ein erfindungsgemässes Aufzeichnungsmaterial, welches den polynuklearen Aluminiumhydroxokomplex A₃₀ enthält, sind in Tabelle 3 zusammengestellt. Die Einwirkungszeit betrug 60 Minuten.

**Tabelle 3**

| Beispiel | Menge Al₃₀ (Molprozent) | Farbdichteverlust in % | | |
|---|---|---|---|---|
| | | Blaugrün | Purpur | Gelb |
| 3 | 0.26 | 2 | 3 | 7 |
| C - 3 | - | 4 | 6 | 3 |

Der Vergleich der Ergebnisse in Tabelle 3 zeigt sofort, dass das erfindungsgemässen Aufzeichnungsmaterial für den Tintenstrahldruck, das den polynuklearen Aluminiumhydroxokomplex A₃₀ enthält (Beispiel 3), wesentlich geringere Dichteverluste der Farbstoffe Blaugrün und Purpur zeigt als das entsprechende Aufzeichnungsmaterial, in welchem die Oberfläche des Siliziumdioxids mit Aluminiumchlorhydrat modifiziert worden ist (Vergleichsbeispiel C - 3).

Die unter den oben angegeben Versuchsbedingungen erhaltenen Dichteverluste für die simulierte Aussenluft-Beständigkeit nach 7 Tagen Lagerung für erfindungsgemässe Aufzeichnungsmaterialien, welche den polynuklearen Aluminiumhydroxokomplex A₃₀ enthalten, sind in Tabelle 4 zusammengestellt.

**Tabelle 4**

| Beispiel | Menge Al₃₀ (Molprozent) | Farbdichteverlust in % | | | |
|---|---|---|---|---|---|
| | | Blaugrün | Purpur | Gelb | Schwarz |
| 2 | 0.50 | 7 | 0 | 0 | 9 |
| C - 2 | - | 16 | 6 | 0 | 18 |

Der Vergleich der Ergebnisse in Tabelle 4 zeigt sofort, dass das erfindungsgemässen Aufzeichnungsmaterial für den Tintenstrahldruck, auf das der polynukleare Aluminiumhydroxokomplex A₃₀ aufgebracht worden war (Beispiel 2), wesentlich geringere Dichteverluste der Farbstoffe Blaugrün und Purpur zeigt als das entsprechende Aufzeichnungsmaterial, welches den polynuklearen Aluminiumhydroxokomplex A₃₀ nicht enthält (Vergleichsbeispiel C - 2).

Die unter den oben angegeben Versuchsbedingungen erhaltenen Dichteverluste für die simulierte Aussenluft-Beständigkeit nach 3 Tagen Lagerung für ein erfindungsgemässes Aufzeichnungsmaterial, welches den polynuklearen Aluminiumhydroxokomplex A₃₀ enthält, sind in Tabelle 5 zusammengestellt.

**Tabelle 5**

| Beispiel | Menge Al₃₀ (Molprozent) | Farbdichteverlust in % | | | |
|---|---|---|---|---|---|
| | | Blaugrün | Purpur | Gelb | Schwarz |
| 3 | 0.26 | 2 | 0 | 0 | 3 |
| C - 3 | - | 5 | 3 | 0 | 5 |

Der Vergleich der Ergebnisse in Tabelle 5 zeigt sofort, dass das erfindungsgemässe Aufzeichnungsmaterial für den Tintenstrahldruck, das den polynuklearen Aluminiumhydroxokomplex A₃₀ enthält (Beispiel 3), wesentlich geringere Dichteverluste der Farbstoffe Blaugrün und Purpur zeigt als das entsprechende Aufzeichnungsmaterial, in welchem die Oberfläche des Siliziumdioxids mit Aluminiumchlorhydrat modifiziert worden ist (Vergleichsbeispiel C - 3).

## Patentansprüche

1. Aufzeichnungsmaterial für den Tintenstrahldruck, das auf einem Träger mindestens eine Tintenaufnahmeschicht bestehend aus Bindemitteln und mindestens einer nanokristallinen, nanoporösen anorganischen Verbindung enthält, **dadurch gekennzeichnet, dass** das Aufzeichnungsmaterialeinen polynuklearen Aluminiumhydroxokomplex Al₃₀ mit 30 Aluminiumatomen enthält.

2. Aufzeichnungsmaterial gemäss Anspruch 1, **dadurch gekennzeichnet, dass** die Menge des polynuklearen Aluminiumhydroxokomplexes Al₃₀ mit 30 Aluminiumatomen 0.01 bis 0.8 Molprozent bezogen auf die Menge der nanokristallinen, nanoporösen anorganischen Verbindungen beträgt.

3. Aufzeichnungsmaterial gemäss Anspruch 1, **dadurch gekennzeichnet, dass** die Menge des polynuklearen Aluminiumhydroxokomplexes Al₃₀ mit 30 Aluminiumatomen 0.1 bis 0.6 Molprozent bezogen auf die Menge der nanokristallinen, nanoporösen anorganischen Verbindungen beträgt.

4. Aufzeichnungsmaterial gemäss den Ansprüchen 1 bis 3, **dadurch gekennzeichnet, dass** der polynukleare Aluminiumhydroxokomplex Al₃₀ mit 30 Aluminiumatomen in wässriger Lösung zu den wässrigen Dispersionen der nanokristallinen, nanoporösen anorganischen Verbindungen zugesetzt wird.

5. Aufzeichnungsmaterial gemäss Anspruch 1, **dadurch gekennzeichnet, dass** die nanokristalline, nanoporöse anorganische Verbindung Siliziumdioxid ist.

6. Aufzeichnungsmaterial gemäss Anspruch 5, **dadurch gekennzeichnet, dass** das Siliziumdioxid in einem Gasphasenverfahren hergestellt wird.

7. Aufzeichnungsmaterial gemäss Anspruch 1, **dadurch gekennzeichnet, dass** die nanokristalline, nanoporöse anorganische Verbindung Aluminiumoxid oder Aluminiumoxid/hydroxid oder mit Salzen der seltenen Erden umgesetztes Aluminiumoxid/hydroxid oder Pseudo-Böhmit ist, das ein oder mehrere Elemente der Ordnungszahl 57 bis 71 des Periodischen Systems der Elemente in einer Menge zwischen 0.2 und 2.5 Molprozent bezogen auf Al₂O₃ enthält.

8. Aufzeichnungsmaterial gemäss den Ansprüchen 1 bis 7, **dadurch gekennzeichnet, dass** als Bindemittel Polyvinylalkohol, Gelatine, Polyvinylpyrrolidon oder Mischungen dieser Verbindungen verwendet werden.

9. Aufzeichnungsmaterial gemäss den Ansprüchen 1 bis 8, **dadurch gekennzeichnet, dass** als Träger beschichtetes oder unbeschichtetes Papier, durchsichtiger oder opaker Polyester oder textile Fasermaterialien verwendet werden.

10. Pigmenthaltige Beschichtungsmassen bestehend aus Bindemitteln, mindestens einer nanokristallinen, nanoporösen anorganischen Verbindung und einem polynuklearen Aluminiumhydroxokomplex Al₃₀ mit 30 Aluminiumatomen zur Herstellung von Tintenaufnahmeschichten für ein Aufzeichnungsmaterial für den Tintenstrahldruck gemäss den Ansprüchen 1 bis 9.

## Claims

1. Recording sheet for ink jet printing having coated onto a support at least one ink-receiving layer consisting of binders and at least one nanocrystalline, nanoporous inorganic compound, **characterised in that** the recording sheet contains a polynuclear aluminium hydroxo complex Al₃₀ with 30 aluminium atoms.

2. Recording sheet according to claim 1, **characterised in that** the quantity of the polynuclear aluminium hydroxo complex Al₃₀ with 30 aluminium atoms is from 0.01 to 0.8 mole percent relative to the quantity of the nanocrystalline, nanoporous inorganic compounds.

3. Recording sheet according to claim 1, **characterised in that** the quantity of the polynuclear aluminium hydroxo complex Al₃₀ with 30 aluminium atoms is from 0.1 to 0.6 mole percent relative to the quantity of the nanocrystalline, nanoporous inorganic compounds.

4. Recording sheet according to claim 1, **characterised in that** the polynuclear aluminium hydroxo complex Al₃₀ with 30 aluminium atoms is added to the aqueous dispersions of the nanocrystalline, nanoporous inorganic compounds as an aqueous solution.

5. Recording sheet according to claim 1, **characterised in that** the nanocrystalline, nanoporous inorganic compound is silicium dioxide.

6. Recording sheet according to claim 5, **characterised in that** the silicium dioxide has been prepared in a gas phase reaction.

7. Recording sheet according to claim 1, **characterised in that** nanocrystalline, nanoporous inorganic compound is aluminium oxide or aluminium oxide/hydroxide or aluminium oxide/hydroxide or pseudo-boehmite comprising one or more of the elements of the rare earth metal series of the periodic system of the elements with atomic numbers 57 to 71 in an amount from 0.2 to 2.5 mole percent relative to Al₂O₃.

8. Recording sheet according to claims 1 to 7, **characterised in that** the binder is polyvinyl alcohol, gelatine, polyvinylpyrrolidone or a mixture of these compounds.

9. Recording sheet according to claims 1 to 8, **characterised in that** the support is coated or uncoated paper, transparent or opaque polyester or fibrous textile material.

10. Pigment containing coating compositions consisting of binders and at least one nanocrystalline, nanoporous inorganic compound and a polynuclear aluminium hydroxo complex Al₃₀ with 30 aluminium atoms for the preparation of ink-receiving layers for recording sheets for ink jet printing according to claims 1 to 9.

## Revendications

1. Feuille d'enregistrement destinée à l'impression par jet d'encre comprenant, sur un support, au moins une couche réceptrice d'encre composée de liants et au moins un composé minéral nanocristallin, nanoporeux, **caractérisée en ce que** la feuille d'enregistrement contient un complexe polynucléaire hydroxo d'aluminium Al₃₀ ayant 30 atomes d'aluminium.

2. Feuille d'enregistrement selon la revendication 1, **caractérisée par le fait que** la quantité du complexe polynucléaire hydroxo d'aluminium Al₃₀ ayant 30 atomes d'aluminium est située entre 0.01 et 0.8 pour-cent molaires par rapport aux composés minéraux nanocristallins, nanoporeux.

3. Feuille d'enregistrement selon la revendication 1, **caractérisée par le fait que** la quantité du complexe polynucléaire hydroxo d'aluminium Al₃₀ ayant 30 atomes d'aluminium est située entre 0.1 et 0.6 pour-cent molaires par rapport aux composés minéraux nano cristallins, nanoporeux.

4. Feuille d'enregistrement selon les revendications 1 à 3, **caractérisée par le fait que** le complexe polynucléaire hydroxo d'aluminium Al₃₀ ayant 30 atomes d'aluminium est ajouté sous forme de solution aqueuse aux dispersions aqueuses des composés minéraux nanocristallins, nanoporeux.

5. Feuille d'enregistrement selon la revendication 1, **caractérisée par le fait que** le composé minéral nanocristallin, nanoporeux est le dioxyde de silicium.

6. Feuille d'enregistrement selon la revendication 5, **caractérisée par le fait que** le dioxyde de silicium a été préparé par une réaction en phase gazeuse.

7. Feuille d'enregistrement selon la revendication 1, **caractérisée par le fait que** le composé minéral nanocristallin, nanoporeux est l'oxyde d'aluminium ou l'oxyde/hydroxyde d'aluminium ou l'oxyde/hydroxyde ou la pseudo-bohémite qui contient 0.2 à 2.5 pour-cent molaires d'un ou de plusieurs éléments ayant les numéros atomiques 57 à 71 de la classification périodique des éléments par rapport à l'Al₂O₃.

8. Feuille d'enregistrement selon les revendications 1 à 7, **caractérisée par le fait que** le liant est l'alcool polyvinylique, la gélatine, le polyvinylpyrrolidone ou un mélange de ces composés.

9. Feuille d'enregistrement selon les revendications 1 à 8, où le support est le papier normal ou enduit, le polyester transparent ou opaque ou les matériaux textiles fibreux.

10. Enduits contenant des pigments composés de liants, au moins un composé minéral nanocristallin, nanoporeux et un complexe polynucléaire hydroxo d'aluminium Al₃₀ ayant 30 atomes d'aluminium pour la préparation de couches réceptrices d'encre d'une feuille d'enregistrement destinée à l'impression par jet d'encre selon les revendications 1 à 9.
